# FASCICULE DE BREVET EUROPEEN

(11) **EP 0 840 041 B1**
(45) Date de publication et mention de la délivrance du brevet: **25.06.2003**
(21) Numéro de dépôt: 97402554.6
(22) Date de dépôt: 28.10.1997
(51) Int. Cl.: F16J 15/06

(54) **Assemblage de deux pièces avec interposition d'un joint à double étanchéité aux fluides et aux ondes électromagnétiques.**
Anordnung zweier Bauteile mit Doppeldichtung für Fluidum und elektromagnetische Wellen
Assembly of two components with a dual containment seal for fluid and electromagnetic waves

(30) Priorité: 30.10.1996 FR 9613257
(43) Date de publication de la demande: 06.05.1998
(73) Titulaire: European Aeronautic Defence and Space Company - EADS France, 75016 Paris (FR)
(72) Inventeur: Durand, François, 78114 Magny-Les -Hameaux (FR)
(74) Mandataire: Ilgart, Jean-Christophe

(56) Documents cités:
- EP-A- 0 117 812
- WO-A-92/12787
- GB-A- 2 291 938

## Description

L'invention a trait un mode d'assemblage de deux pièces mécaniques où un joint à double étanchéité aux fluides fluides et aux ondes électromagnétiques est interposé.

On se préoccupe dans certain cas d'arrêter à la fois les fluides et les ondes électromagnétiques à travers un plan de joint formé par deux pièces mécaniques. On peut alors interposer un joint d'étanchéité approprié entre ces pièces, et la double étanchéité est assurée par la compression du joint entre des portées de ces pièces qui l'enserrent, comme pour les joints ordinaires d'étanchéité aux fluides.

L'étanchéité peut cependant être compromise si les pièces jouent entre elles, notamment par suite des variations de température, ce qui peut écarter les portées d'appui du joint et affaiblir la compression de ce dernier. Les industriels ont prévu ce cas et conçu des colles qui permettent d'unir définitivement le joint aux portées d'appui, même si sa compression diminue. Cette solution n'est toutefois pas entièrement satisfaisante, car si elle garantit en effet l'étanchéité aux fluides, la présence de la colle modifie l'étanchéité aux ondes électromagnétiques.

L'invention a été conçue à partir de cette situation et repose sur l'idée de dissocier les deux fonctions d'étanchéité sur la largeur du joint : un joint utilisé dans l'invention se compose de deux bourrelets reliés par une partie amincie, l'un des bourrelets étant affecté à l'étanchéité aux fluides et l'autre à l'étanchéité aux ondes électromagnétiques. Un tel joint peut être fabriqué facilement à partir d'un joint du commerce dans lequel on exécute un ou deux sillons longitudinaux à l'endroit de la partie amincie pour séparer les bourrelets. Un des bourrelets est enduit de colle et sert à l'étanchéité aux fluides, alors que l'autre reste sec et repose directement sur les portées des pièces entre lesquelles il est comprimé : il sert à l'étanchéité aux ondes électromagnétiques. Les documents EP 0 117 812 A et WO 92 12787 A révèlent des joints d'étanchéité de section analogue ou semblable à celui-ci, mais qui ne sont pas couverts de colle d'un seul côté et n'établissent pas la double étanchéité, ce dont ils ne sont d'ailleurs pas chargés.

L'invention est plus précisément définie par les revendications. Le document GB - 2 291 938 -A doit encore être mentionné : il décrit, conformément au préambule de la revendication 1, un joint "physique" à l'eau et aux poussières et un joint électromagnétique déposés dans un même sillon d'un plan de jonction de deux pièces ; le joint physique subit une expansion qui fait emplir complètement le sillon aux joints et les met en contact comprimé avec les pièces.

Un autre aspect de l'invention consiste en ce que des facteurs de compression différents peuvent être appliqués aux deux bourrelets si on préfère mieux garantir, par un serrage plus prononcé, une des étanchéités que l'autre.

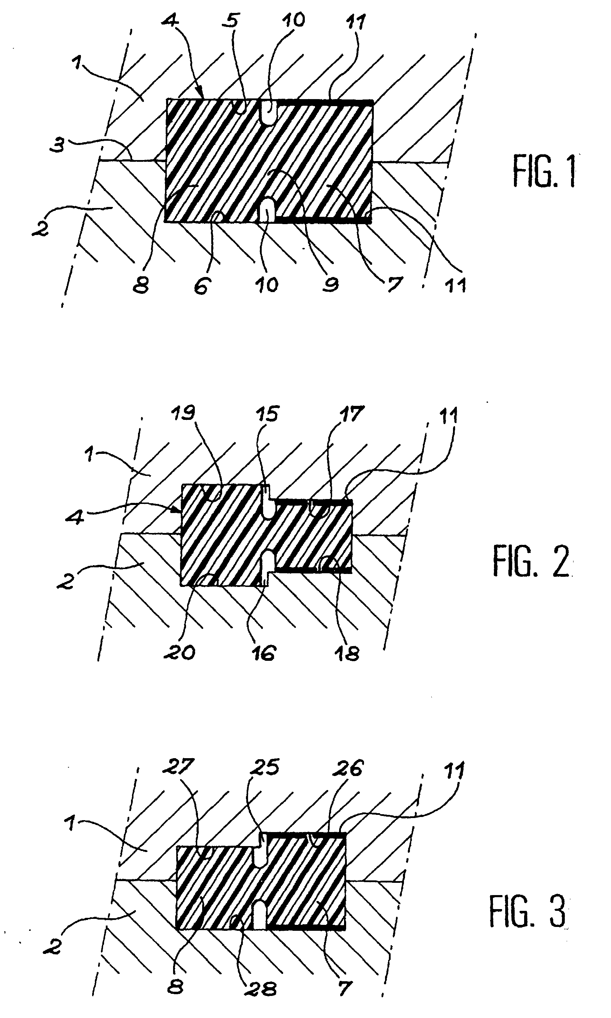

Les particularités de l'invention apparaîtront plus nettement aux commentaires des figures 1, 2 et 3, qui en représentent trois variantes de réalisation et sont annexées à titre purement illustratif.

La figure 1 représente deux pièces mécaniques 1 et 2 réunies par un plan de joint 3 et sur lesquelles on exécute des rainures face à face afin d'y loger un joint 4, qui est ainsi comprimé entre des portées d'appui 5 et 6 formées par le fond de ces rainures. Le joint 4 est représenté en coupe transversale et peut s'étendre à la forme souhaitée, rectiligne, en ligne brisée, circulaire, etc. Sa section est particulière puisqu'il est formé d'un bourrelet extérieur 7 et d'un bourrelet intérieur 8 parallèles dans les trois variantes de l'exemple et réunis par une partie amincie ou un isthme 9. On voit que la partie amincie 9 correspond au creusement du joint 4 selon deux sillons 10 ; le joint 4 conforme à l'invention peut être produit à partir d'un joint du commerce qu'on entaille pour former les sillons 10 ; un exemple idoine pour la double étanchéité est le joint GS-2100 de la marque Gore-Shield, formé d'élastomère auquel on a ajouté 60 à 85% du poids d'élastomère en particules de forme irrégulière et rugueuse, en argent pur, cuivre argenté, aluminium argenté ou verre argenté. Ce joint à section pleine pourrait être remplacé par un joint creux.

Le bourrelet extérieur 7 est dirigé vers les endroits d'où proviennent les liquides et les rayonnements électromagnétiques dont il faut se protéger, et le bourrelet intérieur 8 est dirigé vers les endroits protégés par les pièces 1 et 2 et par le joint 4. Le bourrelet extérieur 7 est affecté à l'étanchéité aux fluides et le bourrelet intérieure à l'étanchéité aux rayonnements électromagnétiques ; la disposition inverse aurait pour inconvénient que le bourrelet affecté à l'étanchéité aux rayonnements pourrait ne pas pouvoir arrêter les fluides, ce qui conduirait à l'invasion d'une partie de l'assemblage autour du joint 4.

Le bourrelet extérieur 7 est avantageusement uni aux portées d'appui 5 et 6 par une couche de colle 11 qui peut être conductrice ou diélectrique selon l'application souhaitée, alors que le bourrelet intérieur 8 reste sec pour assurer sa fonction. Les sillons 10 prévus sur les deux surfaces de compression du joint 4 ont pour avantage principal d'éviter toute influence d'un bourrelet à l'autre et notamment en déformation.

Un autre aspect de l'invention apparaît à la figure 2 : le joint 4 est semblable à celui de la réalisation précédente, mais les rainures simples des pièces 1 et 2 sont remplacées par des rainures doubles présentant un fond 15 ou 16 en dénivellation, avec une partie, respectivement 17 ou 18, comprimant le bourrelet extérieur 7 et une autre partie, respectivement 19 ou 20, comprimant le bourrelet intérieur 8. L'écartement entre les paires de bourrelets 17, 18, et 19, 20, est différent, ce qui permet de comprimer un des bourrelets plus que l'autre quand les pièces 1 et 2 sont assemblées, selon celle des étanchéités qu'on veut favoriser. Ici, le bourrelet extérieur 7 est le plus comprimé mais l'inverse pourrait aussi être choisi ; de plus, une seule des deux rainures peut avoir un fond en dénivellation.

La figure 3 représente ces deux variantes à la fois : le bourrelet intérieur 8 est plus comprimé que le bourrelet extérieur 7 grâce à une rainure opérée dans la pièce 1, dont la portée d'appui 25 comprend une partie profonde 26 devant le bourrelet extérieur 7 et une partie moins profonde 27 devant le bourrelet intérieur 8. Cependant, l'autre pièce 2 est pourvue d'une rainure à profondeur uniforme présentant une portée d'appui 28 commune aux deux bourrelets 7 et 8, comme à la figure 1.

## Revendications

1. Assemblage de deux pièces mécaniques (1,2) définissant un plan de joint (3) avec interposition d'un joint (4) logé dans des portées d'appui (5,6) prévues dans le plan joint (3), le joint étant destiné à créer une étanchéité aux fluides à un premier côté dans la direction du plan de joint (3) et une étanchéité aux ondes électromagnétiques à un deuxième côté opposé au premier dans la direction du plan de joint (3), **caractérisé en ce que** le joint (4) est composé de deux bourrelets (7,8) reliés, dans la direction du plan de joint (3), par une partie amincie (9) du joint (4), **en ce que** le bourrelet (7) situé du côté de l'étanchéité aux liquides est collé aux portées d'appui (5,6), et **en ce que** bourrelet (8) situé du côté de l'étanchéité aux ondes électromagnétiques vient en contact direct avec les portées d'appui (5,6) des deux pièces (1,2).

2. Assemblage de deux pièces mécaniques (1,2) selon la revendication 1, **caractérisé en ce qu'**au moins l'une des portées d'appui (5,6) des pièces (1,2) comprend, dans la direction du plan de joint (3), deux zones de portée en dénivellation (17 à 20, 26, 27) chacune des zones de portée coopérant avec un bourrelet respectif.

3. Procédé de fabrication d'une étanchéité d'un assemblage de deux pièces selon la revendication 1 ou 2, consistant à utiliser un joint de commerce à section de largeur uniforme et à creuser au moins un sillon (10) dans ce joint de sorte à réaliser une partie amincie (9) séparant deux bourrelets (7,8) d'étanchéité.

## Patentansprüche

1. Anordnung von zwei mechanischen Teilen (1,2), die eine Verbindungsebene (3) definiert, mit Dazwischenfügung einer Dichtung (4), die in Anlageflächen (5,6) aufgenommen ist, welche in der Verbindungsebene (3) vorgesehen sind, wobei die Dichtung dazu ausgelegt ist, eine Dichtigkeit gegen Fluide an einer ersten Seite in der Richtung der Verbindungsebene (3) sowie eine Dichtigkeit gegen elektromagnetische Wellen an einer der ersten entgegengesetzten zweiten Seite in der Richtung der Verbindungsebene (3) zu erzeugen, **dadurch gekennzeichnet, dass** die Dichtung (4) durch zwei Wulste (7,8) gebildet ist, die in der Richtung der Verbindungsebene (3) durch einen verdünnten Bereich (9) der Dichtung (4) verbunden sind, dass der auf der Seite der Dichtigkeit gegenüber Flüssigkeiten gelegene Wulst (7) an die Anlageflächen (5,6) geklebt ist, und dass der an der Seite Dichtigkeit gegen elektromagnetische Wellen gelegene Wulst (8) in direkten Kontakt mit den Anlageflächen (5,6) der zwei Teile (1,2) gelangt.

2. Anordnung von zwei mechanischen Teilen (1,2) nach Anspruch 1, **dadurch gekennzeichnet, dass** wenigstens eine der Anlageflächen (5,6) der Teile (1,2) in der Richtung der Verbindungsebene (3) zwei Flächenbereiche mit einem Höhenunterschied (17 bis 20, 26, 27) umfasst, wobei jeder der Flächenbereiche mit einem jeweiligen Wulst zusammenwirkt.

3. Verfahren zur Herstellung einer Dichtung für eine Anordnung von zwei Teilen nach Anspruch 1 oder 2, welches darin besteht, eine handelsübliche Dichtung mit gleichmäßig breitem Querschnitt zu verwenden und wenigstens eine Rille (10) in diese Dichtung derart zu schneiden, dass ein verdünnter Bereich (9) erzeugt wird, der zwei Dichtigkeitswulste (7,8) voneinander trennt.

## Claims

1. Assembly of two mechanical parts (1, 2) defining a mating surface, with a seal (4) housed in seats (5, 6) provided in the mating surface (3), the seal being intended to create a seal for fluids on one side, in the direction of the mating surface (3) and a seal for electromagnetic waves on a second side, opposite the first, in the direction of the mating surface (3), **characterised in that** the seal (4) comprises two ridges (7, 8), in the direction of the mating surface (3), which are connected by a tapered part (9) of the seal (4), **in that** the ridge (7) situated on the side of the liquid seal is attached to the seats (5, 6), and **in that** the ridge (8) situated on the side of the seal for electromagnetic waves comes into direct contact with the seats (5, 6) of the two parts (1, 2).

2. Assembly of two mechanical parts (1, 2) according to the invention, **characterised in that** at least one of the seats (5, 6) of the parts (1, 2) comprises, in the direction of the mating surface (3), two uneven support areas (17 to 20, 26, 27) each of which co-operates with a respective ridge.

3. Method of manufacturing a seal for an assembly of two parts according to claim 1 or 2, consisting in using a commercial seal of uniform size and hollowing out a groove (10) in that seal so as to produce a tapered portion (9) separating two sealing ridges (7, 8).
